# EUROPÄISCHE PATENTANMELDUNG

(11) **EP 3 421 157 A1**
(43) Veröffentlichungstag der Anmeldung: **02.01.2019**
(21) Anmeldenummer: 18174083.8
(22) Anmeldetag: 24.05.2018
(51) Int. Cl.: B22F 3/105, B22F 5/00

(54) **VERFAHREN ZUR HERSTELLUNG EINES LAUFRADS EINER ROTATIONSMASCHINE SOWIE LAUFRAD HERGESTELLT NACH EINEM SOLCHEN VERFAHREN**

(30) Priorität: 30.06.2017 EP 17178975
(71) Anmelder: Sulzer Management AG, 8401 Winterthur (CH)
(72) Erfinder: Rettberg, Robin, 8400 Winterthur (CH); Löffel, Kaspar Prof. Dr., 8700 Küsnacht (CH); Ess, Jonas, 4053 Basel (CH); Huber, Marc, 5412 Vogelsang AG (CH); Hartmann, Martin, 5210 Windisch (CH)
(74) Vertreter: Intellectual Property Services GmbH

(57) **Zusammenfassung**

Es wird ein Verfahren zur Herstellung eines Laufrads einer Rotationsmaschine vorgeschlagen, welches mindestens eine Schaufel (3) umfasst, die einen inneren Kanal (7) begrenzt, der zumindest teilweise geschlossen ist, bei welchem Verfahren das Laufrad sukzessive aus mehreren Materialschichten mittels aufbauender Fertigung aus einem Pulver hergestellt wird, wobei zur Erzeugung jeder Materialschicht das Pulver jeweils auf eine Bearbeitungebene aufgebracht wird, und dann durch selektiven Energieeintrag eine feste Materialschicht aus dem Pulver erzeugt wird, und wobei für das Laufrad eine Aufbauorientierung bestimmt wird, gemäss welcher das Laufrad schichtweise aufgebaut wird, und wobei die Aufbauorientierung durch einen ersten und einen zweiten Winkel (β, α) festgelegt wird, welche Winkel (β, α) die relative Lage des Laufrads zur Bearbeitungsebene beschreiben. Ferner wird ein nach einem solchen Verfahren hergestelltes Laufrad vorgeschlagen.

## Beschreibung

Die Erfindung betrifft ein Verfahren zur Herstellung eines Laufrads einer Rotationsmaschine sowie ein Laufrad einer Rotationsmaschine gemäss dem Oberbegriff des unabhängigen Patentanspruchs der jeweiligen Kategorie.

Bei der Herstellung von Laufrädern (Impellern) von Rotationsmaschinen wie z. B. Pumpen, Turbinen, Kompressoren, Verdichtern oder Expandern ist es bekannt, die Laufräder als Bauteil aus einem Rohling durch zerspanende bzw. spanabhebende Bearbeitung, beispielsweise durch Fräsen, herauszuarbeiten. Dabei kann der Rohling als Vollmaterial vorliegen oder durch einen urformenden Fertigungssprozess bereits vorbearbeitet sein. Auch ist es bekannt, Laufräder gesamthaft urformend, z. B. giesstechnisch, herzustellen.

Ein solches Verfahren ist beispielsweise aus der EP-B-2 012 957 bekannt. Das dort vorgeschlagene Verfahren zeichnet sich insbesondere dadurch aus, dass es eine zerspanende Herstellung des Bauteils ermöglicht, womit gemeint ist, dass das Bauteil gesamthaft aus dem Rohling mittels einer Zerspanvorrichtung zumindest im Wesentlichen in die gewünschte Endform gebracht wird. Das Zusammenfügen von vorgefertigten Komponenten des Bauteils, beispielsweise mittels Schweissens, ist bei einer solchen integralen Herstellung nicht mehr notwendig.

Dabei können die Laufräder aus massivem Material, je nach Anwendung z.B. aus hochfesten Edelstählen, Duplexstahl, Superlegierungen, anderen geeigneten Metallen oder Metalllegierungen oder auch aus nicht metallischen Werkstoffen, beispielsweise keramischen, gefertigt werden und die Schaufeln und Kanäle des Laufrads werden durch spanabhebende Bearbeitung, z.B. durch Fräsen, aus diesem Material herausgearbeitet.

Wie dies auch in der EP-B-2 012 957 bereits dargelegt wird, ist jedoch manchmal aus rein geometrischen Gründen eine gesamthafte zerspanende Herstellung des Bauteils nicht möglich. Dies kann beispielsweise der Fall sein, wenn die Laufräder (Impeller) als gedeckte oder geschlossene Laufräder ausgestaltet sind. Bei einer solchen Ausgestaltung umfasst das Laufrad eine Nabenscheibe, auf welcher die Schaufeln angeordnet sind und ferner eine Deckscheibe, welche die Schaufeln auf Ihrer der Nabenscheibe abgewandten Seite ganz oder zumindest teilweise überdeckt. Somit bilden sich zwischen den Schaufeln zumindest teilweise geschlossene Kanäle aus, die sich jeweils vom Zentrum des Laufrads bis zu seiner äusseren radialen Begrenzungsfläche erstrecken.

Selbst wenn man in Betracht zieht, dass man mit einer Zerspanvorrichtung diese Kanäle von beiden Seiten, also vom Innenraum des Laufrads als auch von seiner radialen Begrenzungsfläche her, aus dem Rohling fräsen bzw. zerspanend bearbeiten kann, so ist klar, dass die Geometrie hier Grenzen setzt und in vielen Fällen eine gesamthafte zerspanende Herstellung unmöglich macht.

In solchen Fällen, in denen es aus rein geometrischen Gründen nicht mehr möglich oder praktikabel ist, das Laufrad insgesamt in einem Stück aus massivem Material zu fräsen, ist es daher eine der möglichen Alternativen, das Laufrad komplett mittels einer aufbauenden Fertigung herzustellen, welche auch als generative oder additiven Fertigung bezeichnet wird.

Bei einer aufbauenden Fertigung wird das Laufrad direkt aus einem formlosen oder formneutrales Material aufgebaut. Dabei wird üblicherweise das formlose Material, z. B. ein Pulver, oder das formneutrale Material, z. B. ein bandförmiges Material oder ein Draht, aufgeschmolzen, um die gewünschte Struktur aufzubauen.

Die aufbauende Fertigung umfasst üblicherweise mehrere additive oder generative Bearbeitungsschritte, bei welchen aus einem formlosen Material, beispielsweise Flüssigkeiten oder Pulver, oder aus einem formneutralen Material, beispielsweise band- oder drahtförmigem Material, mittels chemischer und/oder physikalischer Prozesse die gewünschten Strukturen generiert werden. An sich bekannte additive Fertigungsmethoden insbesondere für metallische Werkstoffe sind beispielsweise Auftragschweissverfahren, speziell Inert-Gas-Verfahren wie Wolfram-Inert-Gas-Schweissen (WIG) oder Laserauftragschweissen, oder Plasmaverfahren oder selektives Laserschmelzen (SLM Selective Laser Melting) oder selektives Lasersintern (SLS).

Bei Strahlschmelzverfahren, wie beispielsweise SLM oder Elektronenstrahlschmelzen wird das Laufrad, bzw. im allgemeinen das Bauteil, sukzessive aus mehreren Materialschichten aufgebaut, wobei zur Erzeugung jeder Materialschicht ein Pulver jeweils auf eine Bearbeitungsebene aufgebracht wird, und dann durch selektiven Energieeintrag eine feste Materialschicht aus dem Pulver erzeugt wird.

Dies geschieht, indem der Werkstoff in Pulverform in einer dünnen Schicht auf die Bearbeitungsebene aufgebracht wird. Dieses Pulver wird dann mittels Energieeinstrahlung, beispielsweise mittels Laserstarhlung, selektiv lokal geschmolzen und bildet nach der Erstarrung eine feste Materialschicht. Anschliessend wird die Bearbeitungsebene um den Betrag einer Schichtdicke abgesenkt und erneut Pulver in einer dünnen Schicht auf die Bearbeitungsebene aufgebracht, um die nächste feste Materialschicht zu generieren. Der Vorgang wird wiederholt, bis das Bauteil komplett aufgebaut ist. Anschliessend kann das Bauteil nachbearbeitet werden, wobei z.B. überschüssiges Pulver oder überschüssiges Material entfernt werden, oder Flächen geglättet, geschliffen, poliert oder auf sonstige Art nachbearbeitet werden, oder wobei das Bauteil einer Wärmebehandlung unterzogen wird.

Bei dem schichtweisen Aufbau mittels eines derartigen Verfahrens ist es insbesondere bei solchen komplexen und insbesondere geometrisch komplexen Strukturen, wie sie Laufräder und speziell geschlossene Laufräder darstellen, in der Regel notwendig, dass gemeinsam mit den Materialschichten Stützstrukturen aufgebaut werden müssen, welche dann Materialschichten stützen, die in nachfolgenden Aufbauschritten generiert werden, bzw. welche eine Grundfläche bilden, auf welcher nachfolgende Materialschichten aufgebaut werden können. Wenn beispielsweise Materialschichten aufgebaut werden sollen, die bezüglich der bereits verfestigten Materialschichten stark überhängende Bereiche aufweisen, also beispielsweise beim Übergang von einer zur Bearbeitungsebene senkrechten Struktur zu einer zur Bearbeitungsebene parallelen Struktur, müssen vorgängig solche Stützstrukturen generiert werden, auf denen dann nachfolgend solche überhängenden Bereiche aufgebaut werden können. Im Allgemeinen geht man davon aus, dass spätestens dann Stützstrukturen benötigt werden, wenn der Überhangswinkel (Downskin-Winkel) - gemessen gegen die Bearbeitungsebene - einen Wert von 40° - 50°, beispielsweise 45°, unterschreitet. In ähnlicher Weise werden Stützstrukturen beispielsweise für die Generierung von Hohlräumen, sehr dünnwandigen Bereichen oder Kanälen benötigt, um nur einige Beispiele zu nennen.

Neben der reinen Unterstützung von herzustellenden Materialschichten haben die Stützstrukturen üblicherweise noch weiter Funktionen, beispielsweise die Abfuhr von Wärme, oder das Verhindern von Verziehungen oder ungewünschten Krümmungen in dem herzustellenden Bauteil.

Es versteht sich, dass die Stützstrukturen nach Beendigung der aufbauenden Fertigung wieder von dem Bauteil entfernt werden müssen. Daher werden die Stützstrukturen häufig mit Sollbruchstellen versehen. Auch ist es bekannt, die Stützstrukturen mit einer geringeren Dichte zu generieren, also beispielsweise porös, oder innen hohl, oder mit Waben- oder Gitterstrukturen. Auch ist es möglich, die Stützstrukturen aus stabförmigen oder plattenförmigen Substrukturen oder aus Stelzen aufzubauen, um so möglichst wenig Pulvermaterial für die Stützstrukturen zu benötigen und ihre einfache Entfernbarkeit zu gewährleisten.

Es ist offensichtlich, dass bei der aufbauenden Fertigung eines komplexen Bauteils mittels sukzessiver Generierung von mehreren Materialschichten aus einem pulverförmigen Werkstoff der Orientierung des herzustellenden Bauteils relativ zur Bearbeitungsebene eine wesentliche Rolle zukommt. Diese Orientierung hat insbesondere einen direkten Einfluss auf die Herstellkosten, den Zeitbedarf für die Herstellung, den Bedarf an Pulvermaterial, die Prozessstabilität, die Qualität des hergestellten Bauteils, oder den Umfang und die Art der notwendigen Nachbearbeitung des hergestellten Bauteils.

Insbesondere für die Herstellung solch komplexer Bauteile wie Laufräder von Rotationsmaschinen und speziell geschlossener oder gedeckter Laufräder ist es daher in der Praxis ein erhebliches Problem, eine für das jeweilige Laufrad geeignete Orientierung zu finden, in welcher das Laufrad effizient aufgebaut werden kann. Diesem Problem widmet sich die vorliegende Erfindung.

Ausgehend von diesem Stand der Technik ist es daher eine Aufgabe der Erfindung, ein Verfahren zur Herstellung eines Laufrads einer Rotationsmaschine vorzuschlagen, bei welchem das Laufrad sukzessive aus mehreren Materialschichten mittels aufbauender Fertigung aus einem Pulver hergestellt wird, wobei das Verfahren eine besonders effiziente und gute Orientierung für den Aufbau des herzustellenden Laufrads ermöglichen soll. Ferner soll durch die Erfindung ein entsprechendes Laufrad vorgeschlagen werden.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zur Herstellung eines Laufrads einer Rotationsmaschine vorgeschlagen, welches mindestens eine Schaufel umfasst, die einen inneren Kanal begrenzt, der zumindest teilweise geschlossen ist, bei welchem Verfahren das Laufrad sukzessive aus mehreren Materialschichten mittels aufbauender Fertigung aus einem Pulver hergestellt wird, wobei zur Erzeugung jeder Materialschicht das Pulver jeweils auf eine Bearbeitungebene aufgebracht wird, und dann durch selektiven Energieeintrag eine feste Materialschicht aus dem Pulver erzeugt wird, und wobei für das Laufrad eine Aufbauorientierung bestimmt wird, gemäss welcher das Laufrad schichtweise aufgebaut wird, und wobei die Aufbauorientierung durch einen ersten und einen zweiten Winkel festgelegt wird, welche Winkel die relative Lage des Laufrads zur Bearbeitungsebene beschreiben.

Ein wesentliches Merkmal ist es dabei, dass die Aufbauorientierung, in welcher das Laufrad relativ zur Bearbeitungsebene aufgebaut wird, lediglich durch zwei Winkel festlegbar ist. Hierdurch ist es in besonders einfacher Weise möglich, für den jeweiligen Anwendungsfall eine Optimierung der Aufbauorientierung durch Variationen des ersten und des zweiten Winkels vorzunehmen. Diese Optimierung kann insbesondere computergestützt, beispielsweise mit CAD Programmen oder speziellen Programmen für die additive Fertigung durchgeführt werden. Da bei der Optimierung nur zwei Parameter, nämlich der erste und der zweite Winkel, variiert werden, kann eine für den jeweiligen Anwendungsfall optimale Aufbauorientierung in einfacher und zuverlässiger Weise bestimmt werden, um so eine besonders effiziente und gute Herstellung des Laufrads zu gewährleisten. Dabei können bei der Optimierung zur Bestimmung einer guten und geeigneten Aufbauorientierung verschiedene Aspekte in den Vordergrund gestellt werden, beispielsweise eine möglichst geringe Aufbauhöhe, eine möglichst kurze Aufbauzeit, eine minimale Anzahl von Materialschichten, eine möglichst geringe Anzahl von Stützstrukturen, eine möglichst gute Zugänglichkeit für die Entfernung der Stützstrukturen, eine möglichst gute Oberflächenbeschaffenheit (z. B. Rauigkeit), oder Kombinationen dieser Aspekte. Die jeweils optimale Aufbauorientierung wird natürlich vor der Herstellung des Laufrads ermittelt und dann festgelegt. Anschliessend wird das Laufrad dann mit dieser bestimmten und fixierten Aufbauorientierung in aufbauender Fertigung hergestellt.

Gemäss einer bevorzugten Ausführungsform werden gemeinsam mit den Materialschichten Stützstrukturen mittels aufbauender Fertigung aus dem Pulver hergestellt, wobei die Stützstrukturen nach Beendigung der aufbauenden Fertigung entfernt werden, und ferner werden der erste und der zweite Winkel optimiert, sodass die Stützstrukturen minimiert werden. Bei dieser Ausführungsform wird die optimale Aufbauorientierung also unter dem Aspekt bestimmt, dass die Stützstrukturen minimiert werden. Dies hat den Vorteil, dass möglichst wenig Material, also Pulver, für die Herstellung der Stützstrukturen benötigt wird, und dass der Arbeitsaufwand für die Entfernung der Stützstellen kleiner gehalten werden kann.

Besonders bevorzugt gibt der erste Winkel den Winkel zwischen einer Rotationsachse des herzustellenden Laufrads und einer W-Achse an, welche senkrecht auf der Bearbeitungsebene steht und in Richtung der aufbauenden Fertigung zeigt.

Gemäss einer bevorzugten Ausführungsform des erfindungsgemässen Verfahrens beschreiben der erste und der zweite Winkel die relative Lage eines Bauteil-Koordinatensystems zu einem Bearbeitungs-Koordinatensystem, wobei das Bauteil-Koordinatensystem bezüglich des Laufrads fixiert ist, und das Bearbeitungs-Koordinatensystem bezüglich der Bearbeitungsebene fixiert ist, wobei das Bauteil-Koordinatensystem eine Z-Achse aufweist, welche durch die Rotationsachse des Laufrads festgelegt wird, sowie eine X-Achse, welche durch eine Verbindungslinie festgelegt wird, die senkrecht auf der Z-Achse steht und die Z-Achse mit einer Austrittskante der Schaufel verbindet, und wobei das Bearbeitungs-Koordinatensystem eine U-V-Ebene umfasst, welche durch die Bearbeitungsebene festgelegt ist, sowie eine W-Achse, welche senkrecht auf der U-V-Ebene steht, und in Richtung der aufbauenden Fertigung zeigt.

Dabei ist es eine insbesondere bevorzugte Massnahme, dass die Aufbauorientierung relativ zu einer Ausgangsorientierung festgelegt wird, in welcher Ausgangsorientierung die Z-Achse mit der W-Achse übereinstimmt, und die X-Achse in der U-V-Ebene liegt.

Vorzugsweise wird dann ausgehend von der Ausgangsorientierung das Bauteil-Koordinatensystem zunächst um den ersten Winkel um die X-Achse gedreht, und wird anschliessend um den zweiten Winkel um die Z-Achse gedreht, um die Aufbauorientierung zu realisieren.

Ferner ist es bevorzugt, wenn das Laufrad eine Mehrzahl von Schaufeln sowie eine Mehrzahl von inneren Kanälen aufweist, wobei benachbarte Kanäle jeweils durch eine Schaufel getrennt sind.

Im Hinblick auf den inneren Kanal bzw. die inneren Kanäle ist es vorteilhaft, wenn der erste und der zweite Winkel optimiert werden, sodass Stützstrukturen in denjenigen Bereichen jedes inneren Kanals vermieden werden, welche für eine Entfernung der Stützstrukturen nicht oder nur schwer zugänglich sind. Das bedeutet, dass bei der Optimierung der Aufbauorientierung insbesondere der Aspekt in den Vordergrund gestellt wird, dass diejenigen Bereiche des Laufrads, welche nach seiner Fertigstellung nicht mehr oder nur noch mit sehr hohem Aufwand zugänglich sind, frei von Stützstrukturen sind. Insbesondere werden also solche Aufbauorientierungen vermieden, bei welchen Stützstrukturen notwendig sind, die so weit im Inneren der Kanäle liegen, dass sie nach der Fertigstellung des Laufrads nur noch sehr schwierig, d. h. mit hohem Aufwand, oder sogar gar nicht mehr entfernt werden können, weil sie von keinem der beiden Enden des Kanals mit vertretbarem Aufwand erreichbar sind.

Für sehr viele Anwendungsfälle hat es sich als besonders günstig erwiesen, wenn der erste Winkel mindestens 70° und höchstens 90° beträgt, vorzugsweise mindestens 75° und höchsten 85°, und besonders bevorzugt etwa 80°.

Vorzugsweise ist der zweite Winkel höchstens so gross wie der Quotient aus 360° und der Anzahl der Schaufeln.

Für viele Anwendungsfälle hat es sich als vorteilhaft erwiesen, wenn der zweite Winkel mindestens 50° und höchstens 60° beträgt, vorzugsweise etwa 54°.

Diese Werte für den zweiten Winkel sind insbesondere auch für solche Laufräder vorteilhaft, bei welchen das Laufrad genau fünf oder genau sechs Schaufeln aufweist.

Vorzugsweise erfolgt der Energieeintrag für die aufbauende Fertigung mit Hilfe eines Lasers.

Insbesondere bevorzugt erfolgt die aufbauende Fertigung mittels selektiven Laserschmelzens. Dieses generative Fertigungsverfahren ist heutzutage ein bekanntes und etabliertes Verfahren, welches insbesondere auch für das erfindungsgemässe Verfahren geeignet ist.

Durch die Erfindung wird ferner ein Laufrad für eine Rotationsmaschine vorgeschlagen, insbesondere für eine Pumpe, eine Turbine, einen Kompressors, einen Verdichter oder einen Expander, wobei das Laufrad mit einem erfindungsgemässen Verfahren hergestellt ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine perspektivische Darstellung eines Ausführungsbeispiels eines erfindungsgemässen Laufrads, das gemäss einem Ausführungsbeispiel eines erfindungsgemässen Verfahrens hergestellt ist,
- Fig. 2:: eine perspektivische Schnittdarstellung des Laufrads aus Fig. 1 in einem Schnitt quer zur Rotationsachse des Laufrads,
- Fig. 3:: eine teilweise geschnitte Darstellung des Laufrads aus Fig. 1 in der Ausgangsorientierung,
- Fig. 4:: eine teilweise geschnitte Darstellung des Laufrads aus Fig. 1 in einer Orientierung, in welcher der erste Winkel β = 30° ist,
- Fig. 5:: eine teilweise geschnitte Darstellung des Laufrads aus Fig. 1 in einer Orientierung, in welcher der zweite Winkel α = 30° ist,
- Fig. 6:: eine perspektivische Darstellung des Laufrads aus Fig. 1 in einer bevorzugten Aufbauorientierung, und
- Fig. 7:: eine andere perspektivische Darstellung des Laufrads aus Fig. 1 in einer bevorzugten Aufbauorientierung mit Stützstrukturen.

Das erfindungsgemässe Verfahren dient zur Herstellung eines Laufrads einer Rotationsmaschine, wobei das Laufrad mindestens eine Schaufel umfasst, die einen inneren Kanal begrenzt, der zumindest teilweise geschlossen ist. Mit einem geschlossenen Kanal ist dabei ein Kanal gemeint, der abgesehen von einem Einlass oder einem Auslass vollständig geschlossen ist, also rohrförmig ausgestaltet ist, das heisst der Kanal ist senkrecht zu seiner Hauptströmungsrichtung überall von einer oder mehreren Wandung(en) begrenzt. Im Unterschied dazu ist mit einem offenen Kanal ein solcher gemeint, der in einer Richtung senkrecht zu seiner Hauptströmungsrichtung, also in einer Richtung senkrecht zu seiner Längserstreckung nicht durch eine Wandung begrenzt, sondern offen ist. So ist beispielsweise ein Kanal mit einer U-förmigen oder V-förmigen Wandung ein offener Kanal. Würde man die offene Seite des U-Profils oder des V-Profils mit einer Decke überdecken, so wäre der Kanal ein geschlossener Kanal.

Mit einem teilweise geschlossenen Kanal ist dann ein solcher gemeint, der teilweise als geschlossener Kanal und teilweise als offener Kanal ausgestaltet ist.

Bei der folgenden Beschreibung der Erfindung wird mit beispielhaftem Charakter auf ein für die Praxis wichtiges Beispiel Bezug genommen, bei welchem das Laufrad ein geschlossenes bzw. gedecktes Laufrad (Impeller) einer Rotationsmaschine, z. B. einer Pumpe, insbesondere einer Zentrifugalpumpe, einer Turbine oder eines Kompressors ist. Zum besseren Verständnis wird zunächst ein Ausführungsbeispiel eines solchen Laufrads beschrieben.

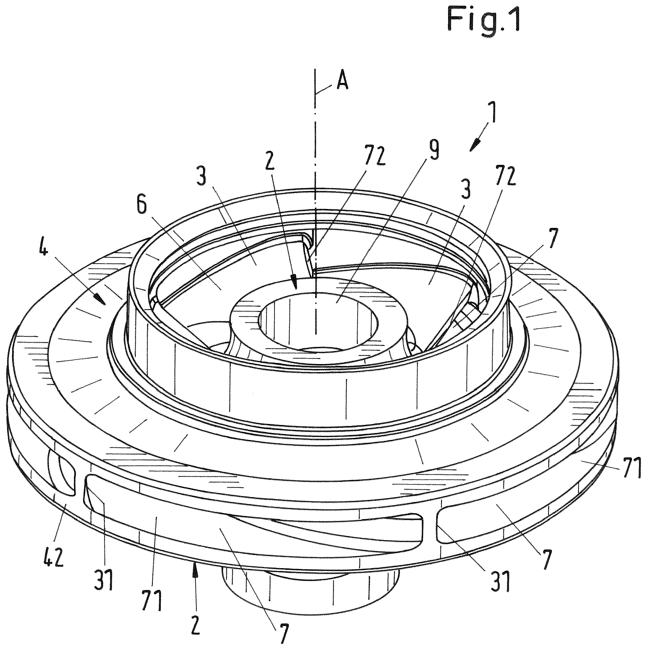

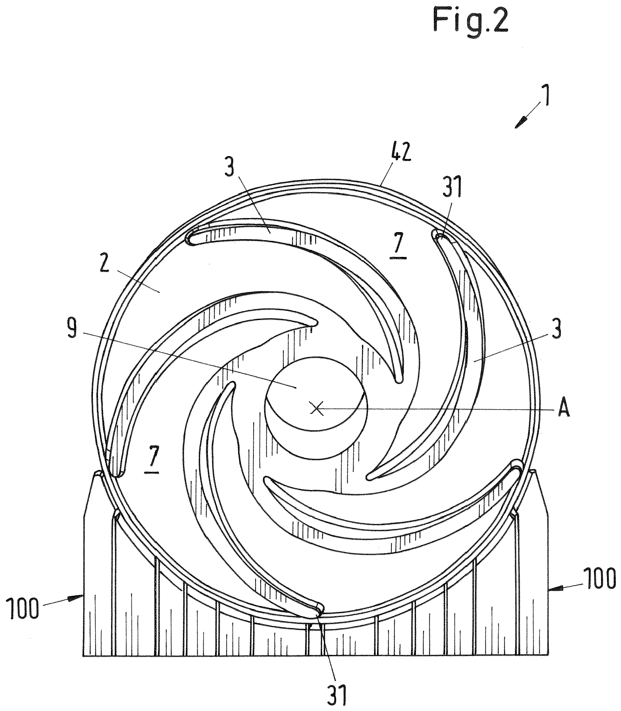

Fig. 1 zeigt eine perspektivische Darstellung eines Ausführungsbeispiels eines erfindungsgemässen Laufrads, das als ein geschlossenes oder gedecktes Laufrad ausgestaltet ist, und das gesamthaft mit dem Bezugszeichen 1 versehen ist. Das Laufrad 1 ist mittels eines erfindungsgemässen Verfahrens herstellbar. Fig. 2 zeigt eine perspektivische Schnittdarstellung des Laufrads 1 aus Fig. 1 in einem Schnitt quer zur Rotationsachse A des Laufrads 1. Zusätzlich sind in Fig. 2 noch Stützstrukturen 100 dargestellt, welche später erläutert werden.

Mit der Rotationsachse A des Laufrads 1 ist dabei die Drehachse gemeint, um welche das Laufrad 1 im Betriebszustand und eingebaut in eine Rotationsmaschine rotiert. Durch die Rotationsachse A wird eine axiale Richtung festgelegt. Mit der axialen Richtung ist also diejenige Richtung gemeint, in welcher sich die Rotationsachse A erstreckt.

Das Laufrad 1 umfasst in an sich bekannter Weise eine Nabenscheibe 2, mit welcher das Laufrad 1 üblicherweise auf einer nicht dargestellten Achse oder Welle montiert oder befestigt wird, ferner mehrere Schaufeln 3, die auf der Nabenscheibe 2 angeordnet sind, sowie eine Deckscheibe 4, welche die Schaufeln 3 auf ihrer der Nabenscheibe 2 abgewandten Seite bzw. Kante zumindest teilweise überdeckt. Dabei erstreckt sich die Deckscheibe 4 bezüglich der axialen Richtung darstellungsgemäss (Fig. 1) höher als die Nabenscheibe 2. Dadurch ist darstellungsgemäss oberhalb der Schaufeln 3 ein Innenraum 6 ausgebildet, der in radialer Richtung, also senkrecht zur axialen Richtung, von der Deckscheibe 4 begrenzt wird. Dieser Innenraum 6 stellt im Betriebszustand den Einlass dar, durch welchen ein Fluid das Laufrad 1 anströmt. Zwischen zwei benachbarten Schaufeln 3 existiert jeweils ein innerer Kanal 7, der als zumindest teilweise geschlossener Kanal 7 und hier als geschlossener Kanal 7 ausgestaltet ist.

Jeder Kanal 7 erstreckt sich von einem ersten Ende 72 in einem Zentrum des Laufrads 1, das durch den Innenraum 6 gebildet wird, bis an ein jeweiliges zweites Ende 71 in einer Begrenzungsfläche 42 des Laufrads 1. Die Begrenzungsfläche 42 stellt die radial äussere Oberfläche des Laufrads 1 dar, welche sich parallel bzw. konzentrisch zur axialen Richtung erstreckt, also die Oberfläche, welche das Laufrad 1 in radialer Richtung begrenzt. Die Begrenzungsfläche 42 umfasst die radial äusseren Oberflächen der Deckscheibe 4 und der Nabenscheibe 2 sowie die radial äusseren Abschlusskanten der Schaufeln 3, die als Austrittskanten 31 bezeichnet werden.

Somit sind benachbarte Kanäle 7 jeweils durch eine Schaufel 3 getrennt.

In dem hier beschriebenen Ausführungsbeispiels umfasst das Laufrad 1 insgesamt fünf Schaufeln 3 wie dies am besten aus Fig. 2 zu erkennen ist. Der Umschlingungswinkel jeder Schaufel 3 ist vorzugsweise mindestens 90° und höchstens 180°. Natürlich ist die Erfindung nicht auf Laufräder 1 mit fünf Schaufeln begrenzt sondern eignet sich auch für Laufräder mit weniger oder mit mehr Schaufeln. Gemäss einer weiteren bevorzugten Ausführungsform hat das Laufrad 1 genau sechs Schaufeln.

Das Laufrad 1 (Fig. 1) weist zudem eine durchgängige zentrale axiale Öffnung 9 auf, welche zur Aufnahme einer Welle oder einer Achse dient, auf welcher das Laufrad 1 montiert werden kann.

Im Folgenden wird nun ein Ausführungsbeispiel des erfindungsgemässen Verfahrens näher erläutert. Zunächst wird die gewünschte geometrische Endform des Laufrads 1 festgelegt. Dann wird das Laufrad 1 mittels aufbauender Fertigung sukzessive aus mehreren Materialschichten aus einem Pulver entsprechend der gewünschten geometrische Endform aufgebaut, wobei bei diesem Prozess zusätzlich Stützstrukturen 100 generiert werden, auf welchen anschliessend generierte Materialschichten aufgebaut werden können. Diese Stützstrukturen 100 sind Hilfsstrukturen für die aufbauende Fertigung, welche nach der Beendigung des aufbauenden Fertigungsprozesses wieder entfernt werden.

Wie dies an sich bekannt ist, kann die geometrische Endform des Laufrads 1 in Form von Daten, z. B. dreidimensionalen Geometriedaten, oder Datenmodellen in einem Computer gespeichert werden, welche dann für die Ansteuerung der Vorrichtung für die aufbauende Fertigung verwendet werden.

Die aufbauende Fertigung ist im Unterschied zur subtraktiven Fertigung ein Verfahren, bei welchem kein Material abgetragen wird. Die aufbauende Fertigung, welche auch als additive oder generative Fertigung bezeichnet wird, umfasst üblicherweise mehrere sukzessive durchgeführte additive Bearbeitungsschritte. Mit einem additiven oder generativen Bearbeitungsschritt bzw. mit einer additiven oder generativen Fertigung ist dabei eine Fertigung gemeint, bei welcher ein formloses oder formneutrales Material aufgetragen wird. Dabei wird üblicherweise aus einem formlosen Material, z. B. ein Pulver, oder aus einem formneutralen Material, z. B. ein bandförmiges oder drahtförmiges Material, durch selektiven Energieeintrag eine feste Materialschicht erzeugt, um die noch fehlenden Teile des Laufrads 1 auf der bereits existierenden, vorher generierten Struktur aufzubauen. Eine aufbauende Fertigung ist also eine Fertigung aus einem formlosen oder formneutralen Material.

Bei dem erfindungsgemässen Verfahren wird zur Erzeugung der jeweiligen Materialschicht jeweils ein Pulver als dünne Schicht auf eine Bearbeitungsebenen aufgebracht. Anschliessend wird durch selektiven Energieeintrag in die Bearbeitungsebene aus dem Pulver eine feste Materialschicht erzeugt. Die bereits aufgebaute Struktur des Laufrads 1 wird dann um die Dicke einer Materialschicht relativ zur Bearbeitungsebene abgesenkt, es wird wiederum eine dünne Pulverschicht auf die Bearbeitungsebene aufgebracht und anschliessend durch Energieeintrag die nächste feste Materialschicht generiert.

Für das erfindungsgemässe Verfahren wird vorzugsweise der Prozess des selektiven Laserschmelzens (SLM: Selective Laser Melting) verwendet, bei welchem ein Bauteil nach diesem Prinzip schichtweise aufgebaut wird.

Als Material für den Aufbau des Laufrads 1 wird insbesondere ein metallischer Werkstoff, z. B. ein Metall oder eine Legierung verwendet, der in Pulverform jeweils auf der Bearbeitungsebene bereitgestellt wird. Für die Herstellung des Laufrads 1 sind insbesondere folgende Materialien geeignet: Edelstähle, austenitische Edelstähle, beispielsweise ein Stahl mit der Typenbezeichnung 316L, Duplexstähle, Nickelbasislegierungen, beispielsweise die unter dem Handelsnamen Inconel bekannten Legierungen, speziell Inconel 625, Kobaltbasislegierungen, Aluminiumlegierungen, Titanlegierungen oder Hartmetalle.

Das Verfahren des selektiven Laserschmelzens zum schichtweisen vollständig generativen Aufbau eines Bauteils ist ein an sich hinreichend bekanntes Verfahren, das daher keiner näheren Erläuterung bedarf. Bei diesem an sich bekannten Verfahren wird das zu verarbeitende Material in Pulverform in einer dünnen Schicht in der Bearbeitungsebene vorgehalten. Das pulverförmige Material wird mittels Laserstrahlung lokal vollständig aufgeschmolzen und bildet nach seiner Erstarrung eine feste Materialschicht. Anschliessend wird das Werkstück um den Betrag einer Schichtdicke abgesenkt, und es wird erneut Material in Pulverform auf die Bearbeitungsebene aufgetragen, das dann wieder mittels Laserstrahlung lokal aufgeschmolzen wird. Dieser Zyklus wird solange wiederholt, bis das Bauteil, hier das Laufrad 1, vollständig aufgebaut ist.

Mit der Bearbeitungsebene ist also diejenige Ebene gemeint, in welcher jeweils der lokale Energieeintrag mittels Laserstrahlung erfolgt, um das Pulver selektiv aufzuschmelzen und die feste Materialschicht zu erzeugen.

Wie dies an sich bekannt ist, werden beim dem schichtweisen Aufbau mittels SLM gemeinsam mit den Materialschichten üblicherweise Stützstrukturen 100 (Fig. 2) aus dem Pulver in der Bearbeitungsebene generiert, die dazu dienen, eine Grundlage zu generieren, auf welcher dann in nachfolgenden Bearbeitungsschritten Strukturen des Laufrads 1 aufgebaut werden können, die ohne diese Stützstrukturen 100 nicht oder nicht mit ausreichender Qualität aufgebaut werden können. Als ein Beispiel seien hier Strukturen genannt, die bezüglich der Bearbeitungsebene stark überhängen. Möchte man z. B. eine Struktur aufbauen, die sich im Wesentlichen parallel zur Bearbeitungsebene erstreckt, so ist es vorgängig notwendig, eine entsprechende Stützstruktur 100 zu generieren, die dann in nachfolgenden Bearbeitungsschritten als Basis dient, auf welcher diese sich parallel zur Bearbeitungsebene erstreckenden Strukturen des Laufrads 1 aufgebaut werden können.

Es gibt aber auch andere Gründe, solche Stützstrukturen 100 aufzubauen. Beispielsweise kann es notwendig sein, zur Erzeugung innerer Kavitäten oder innerer Hohlräume in dem Laufrad 1 Stützstrukturen 100 vorzusehen. Auch ist es möglich, beispielsweise sehr dünnwandige Strukturen des herzustellenden Laufrads 1 mit Stützstrukturen abzustützen, so dass diese sich nicht verziehen oder verbiegen. Das Vorsehen solcher Stützstrukturen 100 an sich ist eine beim SLM-Verfahren bekannte Massnahme, die daher hier nicht näher erläutert wird. Es sei jedoch erwähnt, dass die Stützstrukturen 100 abgesehen von der Stützfunktion auch noch weitere Funktionen erfüllen können, beispielsweise das Abführen von Wärme aus den bereits aufgebauten Strukturen bzw. während des jeweiligen Schmelzprozesses.

Um das Laufrad 1 mittels der aufbauenden Fertigung, hier also mittels des selektiven Laserschmelzens, schichtweise aufzubauen, wird zunächst eine Aufbauorientierung festgelegt, in welcher das Laufrad relativ zur Bearbeitungsebene aufgebaut wird. Die Aufbauorientierung ist dabei eine fixierte Orientierung, die während des generativen Aufbauprozesses nicht geändert wird. Die Aufbauorientierung entspricht dabei derjenigen Orientierung, in welcher sich das Laufrad 1 unmittelbar nach Beendigung der aufbauenden Fertigung relativ zur Bearbeitungsebene befindet. Es versteht sich, dass die Ausgestaltung und die Lage der Stützstrukturen 100 und auch die Anzahl der individuellen aufzubauenden Materialschichten von der gewählten Aufbauorientierung abhängen.

Die geeignete Aufbauorientierung muss natürlich vor dem Beginn der aufbauenden Fertigung festgelegt werden. Nachdem diese Aufbauorientierung dann fixiert ist, kann das Laufrad 1 gemäss dieser Aufbauorientierung schichtweise mittels SLM aufgebaut werden.

Erfindungsgemäss wird vorgeschlagen, dass diese Aufbauorientierung durch einen ersten Winkel β und einen zweiten Winkel α festgelegt wird, wobei die Winkel β, α die relative Lage des Laufrads 1 zur Bearbeitungsebene beschreiben.

Die Massnahme, die Aufbauorientierung lediglich durch zwei Winkel β, α zu beschreiben, hat den Vorteil, dass durch die Variation von nur zwei Parametern, nämlich der Winkel β, α in einem Optimierungsprozess eine für den jeweiligen Anwendungsfall besonders günstige Aufbauorientierung ermittelbar ist. Dabei können für die Optimierung unterschiedliche Aspekte in den Vordergrund gestellt werden: beispielsweise eine möglichst geringe Aufbauhöhe, eine möglichst kurze Aufbauzeit, eine minimale Anzahl von Materialschichten, eine möglichst geringe Anzahl von Stützstrukturen, eine möglichst gute Zugänglichkeit für die Entfernung der Stützstrukturen, eine möglichst gute Oberflächenbeschaffenheit (z. B. Rauigkeit), oder Kombinationen dieser Aspekte.

Zur Bestimmung der geeigneten Aufbauorientierung für das Laufrad 1 werden vorzugsweise zwei Aspekte berücksichtigt, nämlich dass möglichst wenige Stützstrukturen 100 benötigt werden, und dass die Stützstrukturen 100 an Stellen vorgesehen sind, an welchen sie nach Beendigung der aufbauenden Fertigung mit möglichst geringem Aufwand entfernt werden können. Der erstgenannte Aspekt soll den für die Stützstrukturen 100 benötigten Materialaufwand möglichst gering halten, sowie den Arbeitsaufwand für das spätere Entfernen der Stützstrukturen 100; der zweitgenannte Aspekt soll verhindern, dass Stützstrukturen 100 an Stellen generiert werden müssen, die nach Beendigung der aufbauenden Fertigung nur noch sehr schwer oder gar nicht mehr zugänglich sind, um die Stützstrukturen 100 zu entfernen. Beispielsweise soll es verhindert werden, dass Stützstrukturen 100 in den inneren Bereichen der Kanäle 7 aufgebaut werden, die nach Beendigung der aufbauenden Fertigung weder von dem ersten Ende 72 noch von dem zweiten Ende 71 des jeweiligen Kanals 7 in einfacher Weise erreichbar sind.

Zur Bestimmung einer geeigneten Aufbauorientierung wird zunächst die geometrische Endform des Laufrads 1 festgelegt. Es wird dann, beispielsweise basierend auf Erfahrungswerten, ein Startwert für die Aufbauorientierung gewählt, welcher Startwert durch den ersten und den zweiten Winkel β, α beschrieben wird. Für diesen Startwert wird dann vorzugsweise computerunterstützt ermittelt, welche Stützstrukturen 100 benötigt werden, um das Laufrad 1 in dieser speziellen Aufbauorientierung generativ herzustellen. Dabei können die Lage der Stützstrukturen und ihre jeweilige geometrische Ausgestaltung ermittelt werden. Anschliessend werden dann, ausgehend von diesem Startwert für die Aufbauorientierung die beiden Winkel β, α solange variiert, bis eine optimierte Aufbauorientierung ermittelt ist. Gemäss dieser optimierten Aufbauorientierung wird anschliessend das Laufrad 1 mittels SLM aufgebaut.

Die Ermittlung der jeweils benötigten Stützstrukturen 100 während des Optimierungsprozesses kann dabei computerunterstützt erfolgen, insbesondere mit an sich bekannter CAD Software oder spezieller an sich bekannter Computerprogrammprodukte für die aufbauende bzw. additive Fertigung. Selbstverständlich können für den Optimierungsprozess auch empirische Daten oder Erfahrungswerte verwendet werden.

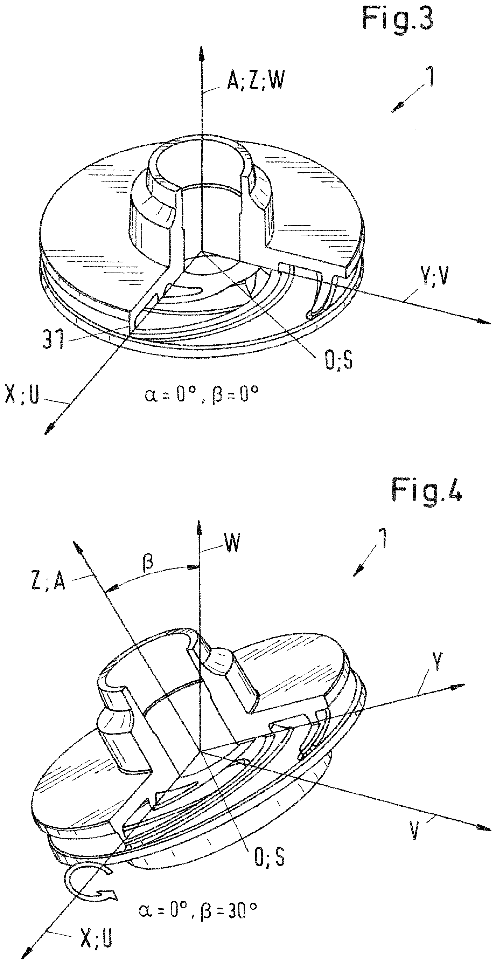

Im Folgenden wird nun anhand der Fig. 3-7 eine bevorzugte Ausführungsform zur Festlegung bzw. zur Bestimmung des ersten Winkels β und des zweiten Winkels α näher erläutert.

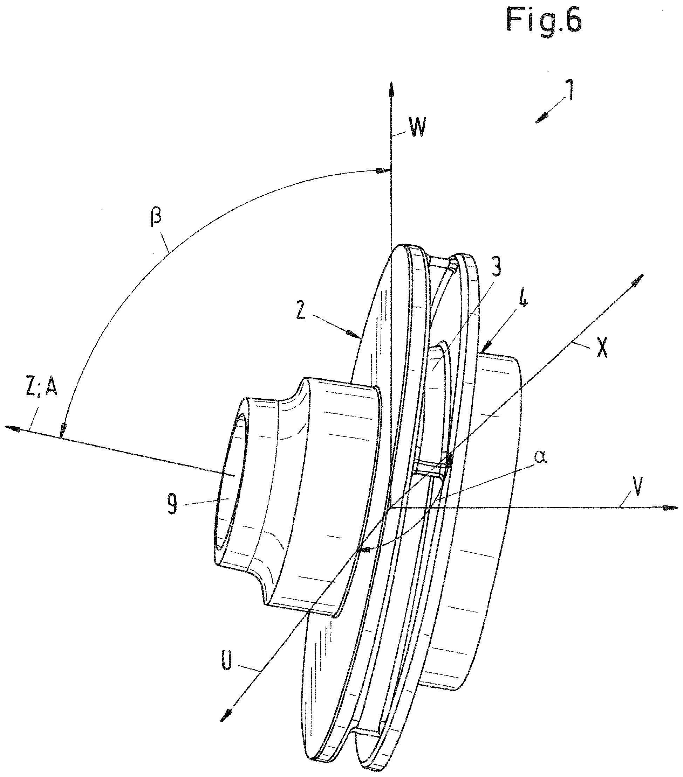

Vorzugsweise ist der erste Winkel β (siehe insbesondere Fig. 4 und Fig. 6) der Winkel zwischen der Rotationsachse A des herzustellenden Laufrads 1 und einer W-Achse W, welche senkrecht auf der Bearbeitungsebene steht und in Richtung der aufbauenden Fertigung zeigt.

Die Bearbeitungsebene, welche diejenige Ebene ist, in welcher die jeweilige Materialschicht durch lokales Aufschmelzen des Pulvers mittels Laserstrahlung erzeugt wird, ist durch die Vorrichtung festgelegt, mit welcher das SLM-Verfahren durchgeführt wird. Die W-Achse W ist eine auf dieser Bearbeitungsebene senkrecht stehende Achse, welche in Richtung der aufbauenden Fertigung zeigt. Während der aufbauenden Fertigung wird also jeweils nach Beendigung der Herstellung einer festen Materialschicht in der Bearbeitungsebene das herzustellende Laufrad 1 um den Betrag einer Schichtdicke in Richtung der negativen W-Achse W, also darstellungsgemäss (Fig. 3 bis Fig. 7) nach unten bewegt, um dann in der Bearbeitungsebene die nächste Materialschicht zu generieren.

Zur Bestimmung der geeigneten Aufbauorientierung werden vorzugsweise zwei Koordinatensysteme festgelegt, wobei die beiden Winkel β, α die relative Lage dieser beiden Koordinatensysteme zueinander beschreiben.

Das erste Koordinatensystem ist ein Bauteil-Koordinatensystem, welches bezüglich des Laufrads 1 fixiert ist. Das zweite Koordinatensystem ist ein Bearbeitungs-Koordinatensystem, welches bezüglich der Bearbeitungsebene - und damit bezüglich der Vorrichtung zur Durchführung des selektiven Laserschmelzens - fixiert ist.

In dem hier beschriebenen Ausführungsbeispiels sind sowohl das Bauteil-Koordinatensystem als auch das Bearbeitungs-Koordinatensystem jeweils ein rechtwinkliges kartesisches Koordinatensystem.

Das Bauteil-Koordinatensystem hat eine Z-Achse Z, welche durch die Rotationsachse A des Laufrads 1 festgelegt ist, sowie eine X-Achse X und eine Y-Achse Y, welche jeweils senkrecht auf der Z-Achse Z stehen. Der Ursprung O des Bauteil-Koordinatensystems liegt auf der Z-Achse Z, also auf der Rotationsachse A des Laufrads 1, und im geometrischen Zentrum der Schaufeln 3, um welches herum die Schaufeln 3 des Laufrads 1 angeordnet sind. Der Ursprung O liegt also auf der Rotationsachse A und bezüglich der axialen Richtung auf halber Höhe der Schaufeln 3. Die X-Achse X wird durch eine Verbindungslinie festgelegt, die senkrecht auf der Z-Achse Z steht, und welche den Ursprung O auf der Z-Achse Z mit einer der Austrittskanten 31 der Schaufeln verbindet (siehe Fig. 3). Aufgrund der Rotationssymmetrie des Laufrads 1 ist es dabei egal, welche der Austrittskanten 31 der Schaufeln 3 für die Festlegung der X-Achse X gewählt wird. Die Y-Achse Y des Bauteil-Koordinatensystems steht senkrecht sowohl auf der X-Achse X und auf der Z-Achse Z. Die Lage der Y-Achse Y ist jedoch für die Bestimmung der Aufbauorientierung ohne wesentliche Bedeutung.

Das Bearbeitungs-Koordinatensystem ist bezüglich der Vorrichtung für die aufbauende Fertigung, hier also durch die Vorrichtung für das selektive Laserschmelzen, fixiert. Das Bearbeitungs-Koordinatensystem umfasst eine U-V-Ebene, welche durch die Bearbeitungsebene festgelegt ist, d.h. die Bearbeitungsebene liegt vollständig in der U-V-Ebene bzw. fällt mit der U-V-Ebene zusammen. Die konkrete Lage der U-Achse U und der dazu senkrechten V-Achse V, welche die U-V-Ebene des Bearbeitungs-Koordinatensystems aufspannen, ist dabei nicht von wesentlicher Bedeutung und kann beliebig gewählt werden. Wesentlich ist lediglich, dass sowohl die U-Achse U als auch die V-Achse V in der Bearbeitungsebene liegen. Somit liegt auch der Ursprung S des Bearbeitungs-Koordinatensystems in der Bearbeitungsebene. Die W-Achse W des Bearbeitungs-Koordinatensystems steht senkrecht auf der Bearbeitungsebene und somit auf der U-V-Ebene und zeigt in die Richtung, in welcher das Laufrad 1 aufgebaut wird, also darstellungsgemäss (Fig. 3 - Fig. 5) nach oben.

Die mittels der Optimierung zu bestimmende Aufbauorientierung wird relativ zu einer Ausgangsorientierung festgelegt, welche in Fig. 3 dargestellt ist.

Fig. 3 zeigt das Laufrad 1 in einer teilweise geschnittenen Darstellung, wobei der Ausbruch so gewählt ist, dass die Lage der beiden Koordinatensystem besser erkennbar ist. In der in Fig. 3 dargestellten Ausgangsorientierung fällt die Z-Achse Z des Bauteil-Koordinatensystems mit der W-Achse W des Bearbeitungs-Koordinatensystems zusammen und die X-Achse X des Bauteil-Koordinatensystems liegt in der U-V-Ebene des Bearbeitungs-Koordinatensystems, also in der Bearbeitungsebene. Folglich fallen die Ursprünge O, S der beiden Koordinatensysteme zusammen. Da es -wie gesagt - auf die konkrete Lage der U-Achse U und der V-Achse V nicht ankommt, sind diese beiden Achsen aus Gründen der besseren Übersicht ohne Beschränkung der Allgemeinheit so festgelegt, dass die U-Achse U mit der X-Achse X übereinstimmt und die V-Achse V mit der Y-Achse Y. Dadurch fallen die drei Achsen U, V, W des Bearbeitungs-Koordinatensystems mit den drei Achsen X, Y, Z des Bauteil-Koordinatensystems zusammen.

Es sei bemerkt, dass die Darstellung in Fig. 3, Fig. 4 und Fig. 5 mit dem jeweils bereits hergestellten Laufrad 1 zur Erläuterung der Bestimmung der Aufbauorientierung dient. Im realen Herstellungsverfahren wird das Laufrad 1 sukzessive darstellungsgemäss von unten nach oben aufgebaut, also in Richtung der W-Achse W. Nach jedem Bearbeitungsschritt, in welchem eine feste Materialschicht erzeugt worden ist, wird das Laufrad 1 um eine Schichtdicke darstellungsgemäss abwärts bewegt, sodass sich die nächste herzustellende Materialschicht wieder in der Bearbeitungsebene befindet. Dies bedeutet, dass während der aufbauenden Fertigung das Bauteil-Koordinatensystem relativ zum Bearbeitungs-Koordinatensystem schrittweise, nämlich jeweils um eine Schichtdicke, in Richtung der negativen W-Achse - also darstellungsgemäss nach unten - verschoben wird, d. h. der Ursprung O des Bauteil-Koordinatensystems wandert auf der W-Achse des Bearbeitungskoordinatensystem darstellungsgemäss nach unten, also in Richtung bzw. auf der negativen W-Achse W. Nach Beendigung der aufbauenden Fertigung befindet sich folglich das Laufrad 1 vollständig unterhalb der Bearbeitungsebene, also der U-V-Ebene des Bearbeitungs-Koordinatensystems.

Zum besseren Verständnis ist aber in den Fig. 3-5 das komplette Laufrad 1 (jeweils mit Ausbruch) dargestellt und die beiden Koordinatensysteme sind so eingezeichnet, dass ihre Ursprünge O bzw. S zusammenfallen.

Ausgehend von der in Fig. 3 dargestellten Ausgangsorientierung wird nun das Bauteil-Koordinatensystem zunächst um den ersten Winkel β im Gegenuhrzeigersinn (also im mathematisch positiven Sinn) um die X-Achse des Bauteil-Koordinatensystems gedreht und anschliessend um den zweiten Winkel α im Gegenuhrzeigersinn um die Z-Achse des Bauteil-Koordinatensystems.

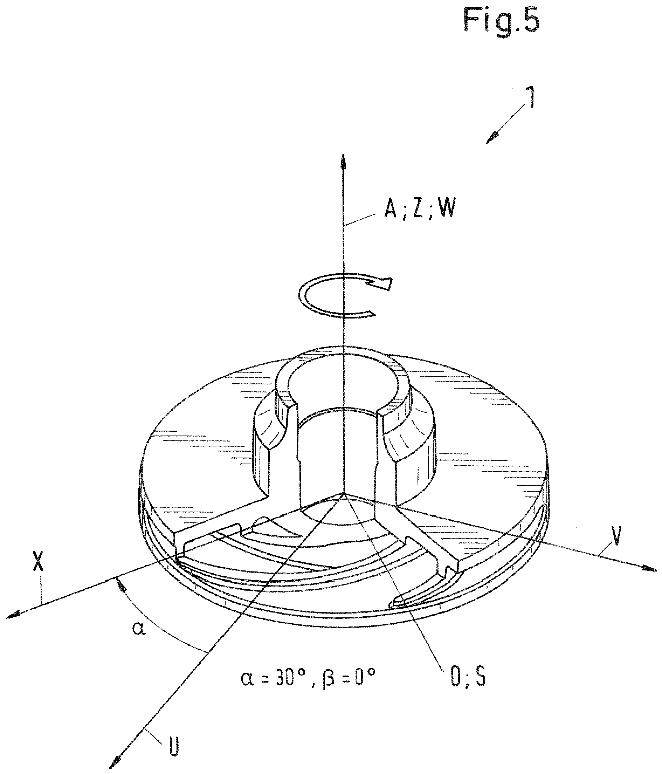

Diese beiden Drehungen sind in Fig. 4 und in Fig. 5 veranschaulicht. Fig. 4 zeigt das Laufrad 1 in einer zu Fig. 3 analogen Darstellung, nachdem das Laufrad 1 und damit das Bauteil-Koordinatensytem ausgehend von der Ausgangsorientierung (Fig. 3) um den ersten Winkel β um die X-Achse des Bauteil-Koordinatensystems gedreht worden ist. Die Drehrichtung ist in Fig. 4 durch den Pfeil ohne Bezugszeichen angezeigt. Durch diese erste Drehung wird die Z-Achse Z des Bauteil-Koordinatensystem bezüglich der W-Achse W des Bearbeitung-Koordinatensystems verkippt, sodass diese beiden Achsen anschliessend den ersten Winkel β einschliessen. Im Beispiel der Fig. 4 hat der erste Winkel β den Wert 30°.

Anschliessend wird das Laufrad 1 um den zweiten Winkel α um die Z-Achse des Bauteil-Koordinatensystems gedreht. Falls der erste Winkel β ungleich Null ist, so hat diese zweite Drehung zur Folge, dass die X-Achse des Bauteil-Koordinatensystems, und damit die Austrittskante 31 der Schaufel 3, aus der U-V-Ebene des Bearbeitungskoordinatensystems und damit aus der Bearbeitungsebene herausgedreht wird.

Zum besseren Verständnis des zweiten Winkels α zeigt Fig. 5 in einer zu Fig. 4 analogen Darstellung das Ergebnis der zweiten Drehung für den Fall, dass der erste Winkel β gleich Null gewählt ist. Der zweite Winkel α hat in Fig. 5 den Wert 30°.

Fig. 6 zeigt in einer perspektivischen Darstellung das Laufrad 1 in einer Aufbauorientierung, in welcher sowohl der erste Winkel β als auch der zweite Winkel α von Null verschieden sind. Ausgehend von der in Fig. 3 veranschaulichten Ausgangsorientierung ist das Laufrad 1 und damit das Bauteil-Koordinatensystem zunächst um den ersten Winkel β im Gegenuhrzeigersinn um die X-Achse X des Bauteil-Koordinatensystems gedreht worden und anschliessend um den zweiten Winkel α im Gegenuhrzeigersinn um die Z-Achse Z des Bauteil-Koordinatensystems. Der erste Winkel β ist dabei 80° und der zweite Winkel α beträgt 54°.

Für die relative Orientierung, welche durch die beiden Winkel β und α bestimmt ist, wird dann vorzugsweise computerunterstützt ermittelt, wo Stützstrukturen 100 benötigt werden und welche geometrische Ausgestaltung die Stützstrukturen haben, damit das Laufrad 1 in der durch die Winkel β und α beschriebenen Aufbauorientierung mittels der aufbauenden Fertigung generiert werden kann. Sind die benötigten Stützstrukturen 100 ermittelt, so wird beurteilt, ob diese Aufbauorientierung bereits optimal oder zumindest ausreichend gut ist, um das Laufrad 1 in dieser Aufbauorientierung zu generieren. Wie bereits erläutert können bei dieser Beurteilung verschiedene Aspekte in den Vordergrund gestellt werden, insbesondere können dies die Aspekte sein, dass die Anzahl der benötigten Stützstrukturen 100 möglichst gering ist und/oder dass die Stützstrukturen an solchen Stellen aufgebaut werden, an denen sie nach Beendigung der aufbauenden Fertigung wieder entfernt werden können, ohne dass dazu ein sehr grosser Aufwand notwendig ist.

Falls sich die momentane Aufbauorientierung bei dieser Beurteilung als noch nicht ausreichend gut herausstellt, so werden in einem Optimierungsprozess die beiden Winkel β, α solange variiert, bis eine optimierte Aufbauorientierung für das Laufrad 1 ermittelt ist. Das Laufrad 1 wird dann gemäss dieser Aufbauorientierung mittels aufbauender Fertigung generiert.

Die in Fig. 6 dargestellte Aufbauorientierung mit dem ersten Winkel β = 80° und dem zweiten Winkel α = 54° ist eine solche bevorzugte optimierte Aufbauorientierung, die sich insbesondere für gedeckte Laufräder mit fünf oder mit sechs Schaufeln 3 bewährt hat, wobei der Umschlingungswinkel jeder Schaufel 3 vorzugsweise 90° bis 180° beträgt.

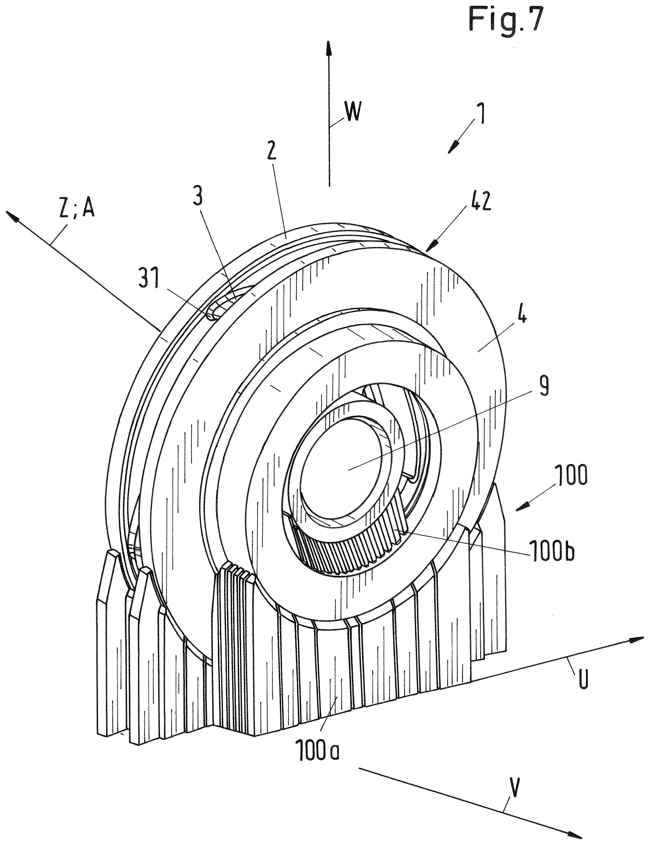

Fig. 7 zeigt das Laufrad 1 aus Fig. 6 in einer anderen perspektivischen Darstellung und in der gleichen Aufbauorientierung wie in Fig. 6, welche durch die beiden Winkel β = 80° und α = 54° beschrieben wird. Zusätzlich sind in Fig. 7 zum besseren Verständnis auch einige der Stützstrukturen 100 dargestellt, nämlich äussere Stützstrukturen 100a, welche die Nabenscheibe 2 sowie die Deckscheibe 4 stützen, insbesondere die radial aussenliegende Begrenzungsfläche 42, und innere Stützstrukturen 100b , welche die Wandung stützen, durch welche die zentrale axiale Öffnung 9 des Laufrads 1 begrenzt wird. Diese inneren Stützstrukturen sind hier im Laufrad 1 vorgesehen, nämlich in dem Innenraum 6 (Fig. 1). Es ist ersichtlich, dass diese äusseren Stützstrukturen 100a und insbesondere auch die inneren Stützstrukturen 100b an solchen Stellen vorgesehen sind, die nach der aufbauenden Fertigung des Laufrads 1 noch sehr einfach zugänglich sind, sodass diese Stützstrukturen 100 anschliessend ohne grösseren Aufwand entfernt werden können.

Die Wahl einer geeigneten Aufbauorientierung, das heisst die Bestimmung von optimierten Winkeln β und α hängt von der Geometrie des Laufrads 1 ab, beispielsweise von der Anzahl der Schaufeln 3 oder vom Umschlingungswinkel der Schaufeln 3. Es hat sich aber für eine Vielzahl von verschiedenen Laufrädern 1 gezeigt, dass es besonders günstig ist, wenn der erste Winkel β mindestens 70° und höchstens 90° beträgt. Als ganz besonders günstig hat es sich erwiesen, wenn der erste Winkel β mindestens 75° und höchstens 85° beträgt. Speziell bevorzugt, insbesondere für gedeckte Laufräder 1 mit genau fünf oder genau sechs Schaufeln 3, beträgt der erste Winkel β etwa 80°.

Der zweite Winkel α ist vorzugsweise höchstens so gross wie der Quotient aus 360° und der Anzahl der Schaufeln 3 des Laufrads 1. Bei einem Laufrad mit fünf Schaufeln 3 ist der zweite Winkel α also vorzugsweise höchstens 72°, und bei einem Laufrad 1 mit genau sechs Schaufeln ist der zweite Winkel α also vorzugsweise höchstens 60°. Diese Werte für den zweiten Winkel α sind insbesondere auch dann bevorzugt, wenn die Schaufeln 3 jeweils einen Umschlingungswinkel von 90° bis 180° aufweisen. Insbesondere für ein Laufrad 1 mit genau fünf oder genau sechs Schaufeln 3 ist der zweite Winkel α vorzugsweise mindestens 50° und höchstens 60°. Besonders bevorzugt ist dabei ein Wert von 54° für den zweiten Winkel α.

Es versteht sich, dass nach der aufbauenden Fertigung des Laufrads 1 noch Nachbearbeitungen des Laufrads 1 durchgeführt werden können. Diese Nachbearbeitungen können beispielsweise eine oder mehrere der folgenden Massnahmen umfassen: Entfernen von Pulverresten; Entfernen der Stützstrukturen 100; subtraktive Nachbearbeitung zur Verbesserung der geometrischen Genauigkeiten oder der Rauhigkeiten, z. B. mittels Fräsens, Drehens, Schleifens; Veränderung der Gefügestruktur durch Wärmebehandlung, Verdichtung des Werkstoffs, z. B. mit heiss-isostatischem Pressen (HIP); Reduzieren von Eigenspannungen.

Das erfindungsgemässe Verfahren eignet sich insbesondere für die Herstellung von Laufrädern 1 für eine Rotationsmaschine, vorzugsweise eine Pumpe, eine Turbine, ein Kompressor, ein Verdichter oder ein Expander. Besonders bevorzugt kann das erfindungsgemässe Verfahren für die Herstellung eines gedeckten Laufrads 1 einer Rotationsmaschine eingesetzt werden.

## Patentansprüche

1. Verfahren zur Herstellung eines Laufrads einer Rotationsmaschine, welches mindestens eine Schaufel (3) umfasst, die einen inneren Kanal (7) begrenzt, der zumindest teilweise geschlossen ist, bei welchem Verfahren das Laufrad sukzessive aus mehreren Materialschichten mittels aufbauender Fertigung aus einem Pulver hergestellt wird, wobei zur Erzeugung jeder Materialschicht das Pulver jeweils auf eine Bearbeitungebene aufgebracht wird, und dann durch selektiven Energieeintrag eine feste Materialschicht aus dem Pulver erzeugt wird, und wobei für das Laufrad eine Aufbauorientierung bestimmt wird, gemäss welcher das Laufrad schichtweise aufgebaut wird, **dadurch gekennzeichnet, dass** die Aufbauorientierung durch einen ersten und einen zweiten Winkel (β, α) festgelegt wird, welche Winkel (β, α) die relative Lage des Laufrads zur Bearbeitungsebene beschreiben.

2. Verfahren nach Anspruch 1, bei welchem gemeinsam mit den Materialschichten Stützstrukturen (100, 100a, 100b) mittels aufbauender Fertigung aus dem Pulver hergestellt werden, wobei die Stützstrukturen (100, 100a, 100b) nach Beendigung der aufbauenden Fertigung entfernt werden, und bei welchem der erste und der zweite Winkel (β, α) optimiert werden, sodass die Stützstrukturen (100, 100a, 100b) minimiert werden.

3. Verfahren nach einem der vorangehenden Ansprüche, wobei der erste Winkel (β) den Winkel zwischen einer Rotationsachse (A) des herzustellenden Laufrads und einer W-Achse (W) angibt, welche senkrecht auf der Bearbeitungsebene steht und in Richtung der aufbauenden Fertigung zeigt.

4. Verfahren nach einem der vorangehenden Ansprüche, bei welchem der erste und der zweite Winkel (β, α) die relative Lage eines Bauteil-Koordinatensystems zu einem Bearbeitungs-Koordinatensystem beschreiben, wobei das Bauteil-Koordinatensystem bezüglich des Laufrads (1) fixiert ist, und das Bearbeitungs-Koordinatensystem bezüglich der Bearbeitungsebene fixiert ist, wobei das Bauteil-Koordinatensystem eine Z-Achse (Z) aufweist, welche durch die Rotationsachse (A) des Laufrads festgelegt wird, sowie eine X-Achse (X), welche durch eine Verbindungslinie festgelegt wird, die senkrecht auf der Z-Achse (Z) steht und die Z-Achse (Z) mit einer Austrittskante (31) der Schaufel (3) verbindet, und wobei das Bearbeitungs-Koordinatensystem eine U-V-Ebene umfasst, welche durch die Bearbeitungsebene festgelegt ist, sowie eine W-Achse (W), welche senkrecht auf der U-V-Ebene steht, und in Richtung der aufbauenden Fertigung zeigt.

5. Verfahren nach Anspruch 4, wobei die Aufbauorientierung relativ zu einer Ausgangsorientierung festgelegt wird, in welcher Ausgangsorientierung die Z-Achse (Z) mit der W-Achse (W) übereinstimmt, und die X-Achse (X) in der U-V-Ebene liegt.

6. Verfahren nach Anspruch 5, bei welchem ausgehend von der Ausgangsorientierung das Bauteil-Koordinatensystem zunächst um den erste Winkel (β) um die X-Achse (X) gedreht wird, und anschliessend um den zweiten Winkel (a) um die Z-Achse (Z) gedreht wird, um die Aufbauorientierung zu realisieren.

7. Verfahren nach einem der vorangehenden Ansprüche, bei welchem das Laufrad eine Mehrzahl von Schaufeln (3) sowie eine Mehrzahl von inneren Kanälen (7) aufweist, wobei benachbarte Kanäle (7) jeweils durch eine Schaufel (3) getrennt sind.

8. Verfahren nach einem der vorangehenden Ansprüche, bei welchem der erste und der zweite Winkel optimiert werden, sodass Stützstrukturen (100) in denjenigen Bereichen jedes inneren Kanals (7) vermieden werden, welche für eine Entfernung der Stützstrukturen nicht oder nur schwer zugänglich sind.

9. Verfahren nach einem der vorangehenden Ansprüche, bei welchem der erste Winkel (β) mindestens 70° und höchstens 90° beträgt, vorzugsweise mindestens 75° und höchsten 85°, und besonders bevorzugt etwa 80°.

10. Verfahren nach einem der vorangehenden Ansprüche, bei welchem der zweite Winkel (a) höchstens so gross ist wie der Quotient aus 360° und der Anzahl der Schaufeln (3).

11. Verfahren nach einem der vorangehenden Ansprüche, bei welchem der zweite Winkel (a) mindestens 50° und höchstens 60° beträgt, vorzugsweise etwa 54°.

12. Verfahren nach einem der vorangehenden Ansprüche, bei welchem das Laufrad genau fünf oder genau sechs Schaufeln (3) aufweist.

13. Verfahren nach einem der vorangehemden Ansprüche bei welchem der Energieeintrag für die aufbauende Fertigung mit Hilfe eines Lasers erfolgt.

14. Verfahren nach einem der vorangehenden Ansprüche, bei welchem die aufbauende Fertigung mittels selektivem Laserschmelzens erfolgt.

15. Laufrad für eine Rotationsmaschine, insbesondere für eine Pumpe, eine Turbine, einen Kompressors, einen Verdichter oder einen Expander, wobei das Laufrad mit einem Verfahren gemäss einem der vorangehenden Ansprüche hergestellt ist.
